# EUROPEAN PATENT SPECIFICATION

(11) **EP 1 213 970 B1**
(45) Date of publication and mention of the grant of the patent: **11.06.2008**
(21) Application number: 00958527.4
(22) Date of filing: 06.09.2000
(51) Int. Cl.: A23K 1/16, A23K 1/18

(54) **METHOD FOR IMPROVING THE SKIN AND COAT OF PETS**
VERFAHREN ZUR VERBESSERUNG DER HAUT UND DES PELZES VON HAUSTIEREN
PROCEDE PERMETTANT D'AMELIORER LA PEAU ET LE PELAGE D'ANIMAUX DE COMPAGNIE

(30) Priority: 07.09.1999 US 152653 P
(43) Date of publication of application: 19.06.2002
(73) Proprietor: SOCIETE DES PRODUITS NESTLE S.A., 1800 Vevey (CH)
(72) Inventor: RUSSELL, Terry, deceased (US); YOUNG, Linda, A., St. Joseph, MO 64506 (US)
(74) Representative: Rupp, Christian
(86) International application number: PCT/EP2000/008747
(87) International publication number: WO 2001/017365

(56) References cited:
- EP-A- 0 850 569
- EP-A- 0 862 863
- WO-A-98/56263
- US-A- 5 756 088
- LOWE J A: "CANINE NUTRITION - RECENT ADVANCES" 1988 , CONFERENCE ON BIOTECHNOLOGY IN THE FEED INDUSTRY. PROCEEDINGS OF ALLTECH , UK XP000670866 page 283, last paragraph -page 284, paragraph 1 page 285, paragraph 3
- FROMAGEOT G: "Influence de l'alimentation du chien sur sa peau et son pelage" RECUEIL DE MEDECINE VETERINAIRE,FR,PARIS, vol. 158, no. 12, 1982, pages 821-826, XP002116483 ISSN: 0034-1843
- C. HAUSMANN: "Anwendung von Chophytol in der tierärztlichen Kleintierpraxis" PRAKTISCHE TIERARZT., vol. 67, no. 11, 1986, page 962 XP000971166 HANNOVER., DE ISSN: 0032-681X

## Description

### Field of the invention

This invention relates to a method of improving or maintaining the condition of the skin and coat system of a pet; especially dog and cat pets.

### Background of the invention

Although the skin is the major external protective organ of a pet, a healthy coat is generally considered to be indicative of a healthy pet; and *vice versa.* For this reason, coat problems are one of the primary causes for pet owners to take their pets to veterinarians. These problems need not necessarily manifest themselves only in the coat, but may appear in the form of a dermatosis such as skin flaking, itchiness, skin lesions, and general dryness of the skin. These are often indicative of a malaise of the protective system provided by the skin and coat as an integrated functioning unit.

Much can be done to maintain or improve the pet's condition by feeding it a complete and balanced food. This provides the essential nutrients and minerals needed to maintain its skin and coat. However, in view of the many agents in the environment that may damage a pet's skin and coat system, feeding the pet a complete and balanced food may not always be sufficient. Therefore many supplements are commercially available for feeding to pets for improving their skin and coat. These supplements are often of questionable efficacy.

A possible link between yeasts and coat condition for dogs is suggested in the paper by Lowe, J.A.;"Canine Nutrition - Recent Advances"; 1988;Conference on Biotechnology in the Feed Industry. Proceedings of Alltech, UK, p.283.

Zinc and linoleic acid are believed to improve the skin of pets. Therefore it has been suggested to include both zinc and linoleic acid in pet foods in excess of the pet's requirements. This approach is described in International Patent Application Number WO 98/56263. However, the levels of zinc required are in excess of those permitted in pet foods in certain markets. Also, high levels of linoleic acid are believed by some veterinarians to be pro-inflammatory.

Probiotic microorganisms are known from US57560088 to Matsuura et al to provide prophylaxis, against dermatosis when administered in combination with a poly-unsaturated fatty acid and biotin and in the form of a prescription diet.

Despite these attempts, there nevertheless remains a need for a method of improving or maintaining the skin and coat system of pets in an integrated manner before the pet presents with disease symptoms. It is an object of this invention therefore to assist in alleviating this need.

### Summary of the invention

This invention is based upon the finding that the condition of the skin and coat system of a pet may be improved, or at least maintained, by administering to the pet a nutritional agent which promotes the growth of bifido- and lactic-bacteria in the gastro-intestinal tract of the pet; and/or increases or improves the digestion of nutrients in the gastro-intestinal tract of the pet.

Accordingly, in one aspect, this invention provides a method of maintaining or enhancing the healthy functioning of the skin and coat system of a pet comprising the step of feeding the pet a food composition comprising a nutritional agent which promotes the growth of bifido- and lactic-bacteria in the gastro-intestinal tract of the pet. The healthy functioning may relate to the protective or appearance-enhancing role of the said system or to both.

The nutritional agent may be a prebiotic or a probiotic micro-organism, or may include both.

In a preferred embodiment, the nutritional agent is a prebiotic. A preferred example is inulin. The prebiotic is preferably derived from a plant source. The plant source may be included in the food composition. The composition may further include a probiotic micro-organism.

In a further aspect of the invention, a method for improving or maintaining the coat of a pet comprises administering to the pet a nutritional agent which promotes the growth of bifido- and lactic-bacteria in the gastro-intestinal tract of the pet. The nutritional agent preferably assists in improving the microflora balance on the skin of the pet.

In another aspect, this invention provides a method for improving or maintaining the skin and coat system of a pet, the method comprising administering to the pet a nutritional agent which increases the digestion of nutrients in the gastro-intestinal tract of the pet.

In a further aspect, this invention provides a method for improving or maintaining the skin and coat system of a pet, the method comprising administering to the pet a nutritional agent which improves the microflora balance on the skin of the pet.

The invention extends also to a method for improving or maintaining the shininess and softness of the coat of a pet, the method comprising administering to the pet a nutritional agent which promotes the growth of bifido- and lactic-bacteria in the gastro-intestinal tract of the pet.

Also provided, is a method of improving or maintaining shininess and softness of the coat of a pet, the method comprising administering to the pet a nutritional agent which increases the digestion of nutrients in the gastro-intestinal tract of the pet.

According to a further aspect, the invention provides a method of reducing or assisting in the prophylaxis of dandruff in the coat of a pet, the method comprising administering to the pet a nutritional agent which promotes the growth of bifido- and lactic-bacteria in the gastro-intestinal tract of the pet, or increases the digestion of nutrients in the gastro-intestinal tract of the pet.

Preferably the nutritional agent is administered to the pet in the form of a complete and nutritionally balanced pet food.

The nutritional agent may be a prebiotic or a probiotic micro-organism, or may include both in a complementary combination.

The pet food may further contain a source of long chain fatty acids, such as linoleic acid. In addition, it may contain a source of zinc.

In this specification:-
"Prebiotic" means a substance or compound which is fermented by the intestinal flora of the pet and hence promotes the growth or development of bifido- and lactic-bacteria in the gastro-intestinal tract of the pet at the expense of pathogenic bacteria. The result of this fermentation is a release of fatty acids, in particular short-chain fatty acids in the colon. This has the effect of reducing the pH value in the colon.
"Probiotic micro-organism" means a micro-organism which beneficially affects a host by improving its intestinal microbial balance (Fuller, R; 1989; J. Applied Bacteriology, 66: 365-378). In general, probiotic micro-organisms produce organic acids such as lactic acid and acetic acid which inhibit the growth of pathogenic bacteria such as *Clostridium perfringens* and *Helicobacter pylori.*

### Detailed description of embodiments of the invention.

It has been surprisingly found that administering to a pet a nutritional agent which promotes the growth of bifido- and lactic-bacteria in the gastro-intestinal tract of the pet improves, or at least maintains, the condition of the skin and coat system of the pet. Without wishing to be bound by theory, it is believed that, amongst other mechanisms, increasing the concentrations of bifido- and lactic-bacteria in the gastro-intestinal tract of the pet produces nutrients and/or increases the absorption of nutrients which are responsible for the improvement or maintenance of the condition of the skin and coat of the pet. Further, increasing the concentrations of bifido- and lactic-bacteria in the gastro-intestinal tract of the pet are thought to promote a better microflora balance on the skin of the pet. These are believed to contribute to the effective functioning of the skin and coat as an integrated protective unit as well as giving it a flourishing appearance.

The nutritional agent may be a prebiotic or a probiotic micro-organism. Further, both prebiotic fibers and probiotic micro-organisms may be administered to the pet. The prebiotic may also be administered in combination with other active ingredients providing a synergistic benefit to the system or to the coat alone.

Suitable prebiotics include oligosaccharides, such as inulin and its hydrolysis products commonly known as fructooligosaccharides, galacto-oligosaccarides, xylo-oligosaccharides or oligo derivatives of starch.

The prebiotics may be provided in any suitable form. For example, the prebiotic may be provided in the form of plant material which contains the fiber. Suitable plant materials includes asparagus, artichokes, onions, wheat or chicory, or residues of these plant materials. Alternatively, the prebiotic fiber may be provided as an inulin extract. Extracts from chicory are particularly suitable. Suitable inulin extracts may be obtained from Orafti SA of Tirlemont 3300, Belgium under the trade mark "Raftiline". For example, the inulin may be provided in the form of Raftiline®ST which is a fine white powder which contains about 90 to about 94% by weight of inulin, up to about 4% by weight of glucose and fructose, and about 4 to 9% by weight of sucrose. Alternatively, the fiber may be in the form of a fructooligosaccharide such as obtained from Orafti SA of Tirlemont 3300, Belgium under the trade mark "Raftilose". For example, the inulin may be provided in the form of Raftilose®P95. Otherwise, the fructooligosaccharides may be obtained by hydrolyzing inulin, by enzymatic methods, or by using micro-organisms.

The probiotic micro-organism may be selected from one or more micro-organisms suitable for animal consumption and which is able to improve the microbial balance in the human or animal intestine.

Examples of suitable probiotic micro-organisms include yeasts such as *Saccharomyces, Debaromyces, Candida, Pichia* and *Torulopsis,* moulds such as *Aspergillus, Rhizopus, Mucor,* and *Penicillium* and *Torulopsis* and bacteria such as the genera *Bifidobacterium, Bacteroides, Fusobacterium, Melissococcus, Propionibacterium, Enterococcus, Lactococcus, Staphylococcus, Peptostrepococcus, Bacillus, Pediococcus, Micrococcus, Leuconostoc, Weissella, Aerococcus, Oenococcus* and *Lactobacillus.* Specific examples of suitable probiotic micro-organisms are: *Saccharomyces cereviseae, Bacillus coagulans, Bacillus licheniformis, Bacillus subtilis, Bifidobacterium bifidum, Bifidobacterium infantis, Bifidobacterium longum, Enterococcus faecium, Enterococcus faecalis, Lactobacillus acidophilus, Lactobacillus alimentarius, Lactobacillus casei* subsp. *casei, Lactobacillus casei Shirota, Lactobacillus curvatus, Lactobacillus delbruckii* subsp. *lactis, Lactobacillus farciminus, Lactobacillus gasseri, Lactobacillus helveticus, Lactobacillus johnsonii, Lactobacillus reuteri, Lactobacillus rhamnosus (Lactobacillus* GG), *Lactobacillus sake, Lactococcus lactis, Micrococcus varians, Pediococcus acidilactici, Pediococcus pentosaceus, Pediococcus acidilactici, Pediococcus halophilus, Streptococcus faecalis, Streptococcus thermophilus, Staphylococcus carnosus,* and *Staphylococcus xylosus.* The probiotic micro-organisms may be in powdered, dried form; especially in spore form for micro-organisms which form spores. Further, if desired, the probiotic micro-organism may be encapsulated to further increase the probability of survival; for example in a sugar matrix, fat matrix or polysaccharide matrix.

The nutritional agent may be administered to the pet as a supplement to the pet's normal diet or as a component of a nutritionally complete pet food. It is preferred to include the nutritional agent in a nutritionally complete pet food. However, if administered as a supplement, this may be done by way of example, by including the agent as in a separate container, such as a sachet in a package together with a nutritionally complete food composition.

The nutritionally complete pet food may be in any suitable form; for example in dried form, semi-moist form or wet form. These pet foods may be produced as is conventional. Apart from the nutritional agent, these pet foods may include any one or more of a starch source, a protein source and lipid source. Suitable starch sources are, for example, grains and legumes such as com, rice, wheat, barley, oats, soy, and mixtures of these. Suitable protein sources may be selected from any suitable animal or vegetable protein source; for example meat and meat meals, poultry meal, fish meal, soy protein concentrates, milk proteins, gluten, and the like. Suitable lipid sources include meats, animal fats and vegetable fats. The choice of the starch, protein and lipid sources will be largely determined by the nutritional needs of the animal, palatability considerations, and the type of product produced. Further, various other ingredients, for example, sugar, salt, spices, seasonings, vitamins, minerals, flavoring agents, fats and the like may also be incorporated into dried food as desired.

For dried pet foods a suitable process is extrusion cooking, although baking and other suitable processes may be used. When extrusion cooked, the dried pet food is usually provided in the form of a kibble. If a prebiotic is used, the prebiotic may be admixed with the other ingredients of the dried pet food prior to processing. A suitable process is described in European patent application No 0850569. If a probiotic micro-organism is used, the organism is best coated onto or filled into the dried pet food. A suitable process is described in European patent publication Number EP 0 862 863.

For wet foods, the processes described in US patents 4,781,939 and 5,132,137 may be used to produce simulated meat products. Other procedures for producing chunk type products may also be used; for example cooking in a steam oven. Alternatively, loaf type products may be produced by emulsifying a suitable meat material to produce a meat emulsion, adding a suitable gelling agent, and heating the meat emulsion prior to filling into cans or other containers.

The maximum level of prebiotic in the pet food is preferably about 20% by weight; especially about 10% by weight. For example, the prebiotic may comprise about 0.1 % to about 5% by weight of the pet food. For pet foods which use chicory as the prebiotic, the chicory may be included to comprise about 0.5% to about 10% by weight of the feed mixture; more preferably about 1% to about 5% by weight.

If a probiotic micro-organism is used, the pet food preferably contains about 10⁴ to about 10¹¹ cells of the probiotic micro-organism per gram of the pet food; more preferably about 10⁶ to about 10⁸ cells of the probiotic micro-organism per gram. The pet food may contain about 0.5% to about 20% by weight of the mixture of the probiotic micro-organism; preferably about 1% to about 6% by weight; for example about 3% to about 6% by weight.

The probiotic may be applied to the pet food in any suitable manner. By way of example, it may be mixed with a suitable carrier substrate and sprayed onto the food particles, such as kibbles. Examples of carrier substrates are edible fats such as tallow or vegetable oils or fats such as hydrogenated soy fat. Protein digests and water may also be used. The carrier may be applied to the pet food prior to the application of the probiotic, or simultaneously.

The pet foods may contain other active agents such as long chain fatty acids and zinc. Suitable long chain fatty acids include alpha-linoleic acid, gamma linolenic acid, linoleic acid, eicosapentanoic acid, and docosahexanoic acid. Fish oils are a suitable source of eicosapentanoic acids and docosahexanoic acid. Borage oil, blackcurrent seed oil and evening primrose oil are suitable sources of gamma linolenic acid. Safflower oils, sunflower oils, com oils and soy bean oils are suitable sources of linoleic acid. These oils may also be used in the coating substrates referred to above. Zinc may be provided in various suitable forms, for example as zinc sulfate or zinc oxide. Further, many ingredients commonly used in pet foods are sources of fatty acids and zinc. It has been observed that the combination of chicory, as a source of prebiotic, with a linoleic-acid rich oil, such as soy bean oil, provides unexpected benefits, suggestive of a synergistic effect.

The amount of the pet food to be consumed by the pet to obtain a beneficial effect will depend upon the size, type and age of the pet. However an amount of the pet food to provide a daily amount of about 1g to about 100g of prebiotic, or about 10⁶ to about 10¹² cells of the probiotic micro-organism, would usually be adequate.

Numerous modifications may be made to the embodiments described above without departing from the scope of the invention. Specific examples are now described for further illustration. The first two involve assessments performed by a trained evaluation panel, the creation of which is now described.

### Evaluation panel

A trained evaluation panel is created to evaluate the skin and coat condition of pets. Parameters to be evaluated by the panelists are visual parameters, touch parameters, and odor parameters. The panel contains 8 panelists. In order to train the panelists, a full sample range of dogs/cats is selected. Several breeds and colors of dogs or several colors of cats are used. All age groups are included for different levels of coat softness. Similarly, non-odorous and odorous animals are included.

A vocabulary and glossary are then developed together with the panelists. Different animals are considered and a list of all possible descriptors is generated. This is then reduced to the essential terms relating to pet skin and coat parameters. A glossary is then written to define each descriptor. High and low values for each descriptor on the scale are agreed upon.

The panel is then trained. Three cats and three dogs are used. For each attribute, each panelist evaluates the pet on a discrete 7-point scale ranging from "not" to "very". Each panelist's score is compared to the score of the other panelists. The panelists then agree on how attributes should be scored. The panelists then rate three new dogs/cats for the same attribute. The process is repeated until the scores obtained by the panelists are consistent.

The trained panelists thus:
- agree on the descriptors;
- have learnt to use an agreed questionnaire and follow test procedures; and
- are reasonably consistent.

### Example 1

Four dried pet foods are used in the study. Pet food A is a nutritionally complete dried pet food, available under the brand name ALPO Beefy Dinner. (ALPO is a registered trade mark of SOCIETE DES PRODUITS NESTLE S.A. of SWITZERLAND).

Pet food B is a nutritionally complete dried pet food which is substantially identical to Pet Food A but which contains 3% by weight of linoleic acid. These are the control foods. Pet food 1 is a nutritionally complete dried pet food which is substantially identical to Pet Food A but which contains 2% by weight of chicory. Pet food 2 is a nutritionally complete dried pet food which is substantially identical to Pet Food 1 but which contains 3% by weight of linoleic acid.

A group of 32 dogs are used in the study. The dogs are prefed for 8 weeks using Pet Food A. The dogs are then divided into 4 groups of 8 dogs and fed the following diets for 8 weeks:

| Group | Pet Food Diet |
|---|---|
| A | A |
| B | B |
| 1 | 1 |
| 2 | 2 |

The dogs have free access to water and are fed once a day. The following parameters are determined at 0, 4 weeks, 8 weeks and 12 weeks:-
- Sebum lipids;
- Skin lipids;
- Sensory parameters such as skin gloss, scaliness, odor, softness, etc (using the trained panel);
- Skin hydration using a comeometer - made in three skin locations (back, below the breast bone, lower abdomen, flank);
- Sebum production using a sebumeter - made in three skin locations (back, below the breast bone, lower abdomen);
- Skin pH using a skin pH meter - made in three skin locations (back, below the breast bone, lower abdomen);
- Transepidermal water loss using a tewameter - made in three skin locations (back, below the breast bone, lower abdomen);
- Skin elasticity using a cutometer- made in three skin locations (back, below the breast bone, lower abdomen);
- Skin thickness using calipers - made in three skin locations (back, below the breast bone, lower abdomen);
- Skin and coat odor;
- Skin light reflectance and coat gloss (top of head, base of neck, flank and rump);
- oxidative stress such as blood superoxide dismutase levels, glutathione peroxidase and total plasma antioxidant levels;
- serum alpha-1-glycoprotein as an inflammation marker;
- Blood fatty acids.

The dogs are groomed prior to evaluation by the panel and the panel members do not compare notes during the evaluation.

The skin and coat condition of all dogs is visually and tactilely good as can be expected of normal, healthy dogs. However, the dogs which are fed Pet Foods 1 and 2 have increased coat shininess, coat softness, skin hydration score, skin elasticity; and blood, skin and sebum linoleic content. Further these dogs have reduced transepidermal water loss, oxidative stress and inflammation. All dogs have substantially the same blood chemistry, skin thickness, skin odor, sebum production and skin pH.

Pet Foods 1 and 2 have substantially the same product stability and palatability as Pet Foods A and B.

### Example 2

The procedure of example 1 is repeated with 32 elderly dogs. Four dried pet foods are used in the study. Pet food A is a nutritionally complete dried pet food (ALPO Beefy Dinner). Pet food 3 is a nutritionally complete dried pet food which is substantially identical to Pet Food A but which contains 2% by weight of chicory, 0.5% by weight of alpha-linoleic acid and 3% by weight of linoleic acid. Pet food 4 is a nutritionally complete dried pet food which is substantially identical to Pet Food 3 but which contains 0.5% by weight of eicosapentanoic acid and docosahexanoic acid in place of the alpha-linoleic acid. Pet food 5 is a nutritionally complete dried pet food which is substantially identical to Pet Food 3 but which contains 0.5% by weight of gamma-linolenic acid in place of the alpha-linoleic acid.

The dogs are prefed for 8 weeks using Pet Food A. The dogs are then divided into 4 groups of 8 dogs and fed the following diets for 8 weeks:

| Group | Pet Food Diet |
|---|---|
| A | A |
| 3 | 3 |
| 4 | 4 |
| 5 | 5 |

The evaluation panel's findings are that the skin and coat condition of all dogs is visually and tactilely good as can be expected of normal, healthy dogs. However, the dogs which are fed Pet Foods 3, 4 and 5 have increased coat shininess, coat softness, skin hydration score, skin elasticity; and blood, skin and sebum linoleic content. Further these dogs have reduced transepidermal water loss, oxidative stress and inflammation. All dogs have substantially the same blood chemistry, skin thickness, skin odor, sebum production and skin pH. The dogs fed Pet Food 5 have slightly better skin and coat condition than those fed Pet Foods 3 and 4.

Pet Foods 3, 4 and 5 have substantially the same product stability and palatability as Pet Food A.

### Example 3

Four canned pet foods are used in the study. As in example 1, Pet food "A" is a nutritionally complete canned pet food, available under the brand name MIGHTY DOG Senior Beef and Rice (MIGHTY DOG is a registered trade mark of SOCIETE DES PRODUITS NESTLE S.A. of SWITZERLAND).

Pet food 1 is a nutritionally complete canned pet food which is substantially identical to Pet Food A but which contains 1% by weight of chicory. Pet food 2 is a nutritionally complete canned pet food which is substantially identical to Pet Food A but which contains 0.75% by weight of soybean oil. Pet food 3 is a nutritionally complete canned pet food which is substantially identical to Pet Food A but which contains 1% by weight of chicory and 0.75% by weight soybean oil.

A group of 32 dogs are used in the study. The dogs are prefed for 8 weeks using Pet Food A. The dogs are then divided into 4 groups of 8 dogs and fed the following diets for 8 weeks:

| Group | Pet Food Diet |
|---|---|
| A | A |
| 1 | 1 |
| 2 | 2 |
| 3 | 3 |

The dogs have free access to water and are fed once a day. The prevalence of dandruff in the coat is determined by a 30 member evaluation panel at commencement and then at 7 weeks later.

The dogs are groomed prior to evaluation by the panel and the panel members do not compare notes during the evaluation.

In this evaluation the dogs are presented to each of the individual panelists in 24 different pairings. The panelists are asked to indicate on a their scoresheets which dog of the pair presented displays less dandruff.

The overall coat condition of all dogs is visually and tactilely good as can be expected of normal, healthy dogs. However, the dogs which are fed Pet Food 3 are found to have noticeably less dandruff than those fed on the control diet, suggesting a synergistic effect between the prebiotic chicory and the fatty acids derived from the soybean oil.

### Example 4

A feed mixture is made up of com, com gluten, chicken and fish meal, salts, vitamins and minerals. The feed mixture is fed into a preconditioner and moistened. The moistened feed leaving the preconditioner is then fed into an extruder-cooker and gelatinised. The gelatinised matrix leaving the extruder is forced through a die and extruded. The extrudate leaving the die head is cut into pieces suitable for feeding to dogs, dried at about 140°C for about 20 minutes, and cooled to form pellets. The water activity of the pellets is about 0.6.

The pellets are sprayed with a coating substrate comprising tallow fat. The probiotic, *Bacillus coagulans,* is in the form of powdered endospores and is applied by dry spraying before the tallow sets so as to adhere to or be partially penetrated in the fat layer. *B. coagulans* in endosporic form is obtainable from Sankyo Pharmaceutical Company under the trade name Lacris-S. The pellets thus hold about 1.6 x 10⁶ cells/g of *B. coagulans..* Results from storage at 37°C for 8 weeks indicate that the micro-organisms display excellent stability and are likely to be stable after one year of storage at normal conditions.

A trial is conducted using 30 dogs. The dogs are fed a standard dried diet corresponding to diet A in example 3 for a week prior to commencement of the trials. Immediately prior to commencement of the trials, the coat condition of the participating dogs is assessed by an evaluation panel as described in Example 3.

The dogs are then separated into two groups of 15 dogs. One group of dogs is fed the dried pellets coated with *B. coagulans* and the tallow coating. The other group of dogs continues to be fed diet A, thus providing a control diet. Both groups are given free access to the food and to water.

After 12 weeks, the coat condition of each dog is again evaluated. The dogs which are fed the pellets with the probiotic and tallow coating have a significantly shinier appearance and display no noticeable dandruff than the dogs on diet A.

## Claims

1. The use of a nutritional agent selected from the group of prebiotics, in which the prebiotic is selected from the group of inulin, fructooligosaccharides and plant materials which contain inulin and/or fructooligosaccharides for the manufacture of a composition for improving or maintaining the skin and coat system of a pet.

2. Use according to claim 1, in which a probiotic micro-organism is included in the food composition.

3. The use according to claim 1 or 2, in which the pet food comprises a long chain fatty acid.

4. The use according to any of claims 1 to 3 in which the nutritional agent is a component of a nutritionally complete pet food.

5. The use according to any of claims 1 to 3 in which the nutritional agent is a supplement to the pet's normal diet.

6. The use according to any of the preceding claims in which the pet food comprises a zinc source.

7. Use according to any of the preceding claims, in which the pet food contains 0.1% to 0.5% by weight of a prebiotic fibre as the nutritional agent.

8. Use according to any of the preceding claims, in which the pet food contains 10⁴ to 10¹¹ cells of a probiotic micro-organism per gram of the pet food.

9. Use according to any of the preceding claims, in which the pet food comprises a zinc source.

10. The use according to any of the preceding claims, for improving or maintaining shininess and softness of the coat of a pet.

11. The use according to any of the preceding claims, for reducing or assisting in the prophylaxis of dandruff in the coat of a pet.

12. The use according to claim any of the preceding claims, wherein the composition includes soybean oil.

13. The use according to any of the preceding claims, wherein the composition includes chicory.

## Patentansprüche

1. Verwendung eines Ernährungsmittels, ausgewählt aus der Gruppe der Prebiotika, in der das Prebiotikum aus der Gruppe Inulin, Fructo-Oligosaccharide und Pflanzenstoffe, die Inulin und/oder Fructo-Oligosaccharide enthalten, ausgewählt ist, zur Herstellung einer Zusammensetzung zur Verbesserung oder zum Erhalten des Haut- und Fell-Systems eines Haustieres.

2. Verwendung nach Anspruch 1, wobei ein probiotischer Mikroorganismus in der Futterzusammensetzung enthalten ist.

3. Verwendung nach Anspruch 1 oder 2, wobei das Haustierfutter eine langkettige Fettsäure enthält.

4. Verwendung nach einem der Ansprüche 1 bis 3, wobei das Ernährungsmittel eine Komponente eines Vollwerternährungshaustierfutters ist.

5. Verwendung nach einem der Ansprüche 1 bis 3, wobei das Ernährungsmittel eine Ergänzung zur normalen Ernährungsweise des Haustiers ist.

6. Verwendung nach einem der vorstehenden Ansprüche, wobei das Haustierfutter einen Zinkquelle enthält.

7. Verwendung nach einem der vorstehenden Ansprüche, wobei das Haustierfutter 0,1 Gew.-% bis 0,5 Gew.-% einer prebiotischen Faser als Nährstoffmittel enthält.

8. Verwendung nach einem der vorstehenden Ansprüche, wobei das Haustierfutter 10⁴ bis 10¹¹ Zellen eines probiotischen Mikroorganismus' pro Gramm des Haustierfutters enthält.

9. Verwendung nach einem der vorstehenden Ansprüche, wobei das Haustierfutter eine Zinkquelle enthält.

10. Verwendung nach einem der vorstehenden Ansprüche zur Verbesserung oder zum Erhalten des Glanzes und der Weichheit des Fells eines Haustiers.

11. Verwendung nach einem der vorstehenden Ansprüche zur Reduktion von Schuppen oder zur Unterstützung bei der Prophylaxe gegen Schuppen im Fell eines Haustiers.

12. Verwendung nach einem der vorstehenden Ansprüche, wobei die Zusammensetzung Sojabohnenöl enthält.

13. Verwendung nach einem der vorstehenden Ansprüche, wobei die Zusammensetzung Chicorée enthält.

## Revendications

1. Utilisation d'un agent nutritionnel choisi dans le groupe des prébiotiques, dans laquelle le prébiotique est choisi dans le groupe comprenant l'inuline, des fructo-oligosaccharides et des substances végétales qui contiennent de l'inuline et/ou des fructo-oligosaccharides, pour la production d'une composition destinée à améliorer ou maintenir le système de la peau et du pelage d'un animal de compagnie

2. Utilisation suivant la revendication 1, dans laquelle un micro-organisme probiotique est incorporé à la composition alimentaire.

3. Utilisation suivant la revendication 1 ou 2, dans laquelle l'aliment pour animaux de compagnie comprend un acide gras à chaîne longue.

4. Utilisation suivant l'une quelconque des revendications 1 à 3, dans laquelle l'agent nutritionnel est un constituant d'un aliment nutritionnellement complet pour animaux de compagnie.

5. Utilisation suivant l'une quelconque des revendications 1 à 3, dans laquelle l'agent nutritionnel est un supplément au régime alimentaire normal de l'animal de compagnie.

6. Utilisation suivant l'une quelconque des revendications précédentes, dans laquelle l'aliment pour animaux de compagnie comprend une source de zinc.

7. Utilisation suivant l'une quelconque des revendications précédentes, dans laquelle l'aliment pour animaux de compagnie contient 0,1 % à 0,5 % en poids d'une fibre prébiotique comme agent nutritionnel.

8. Utilisation suivant l'une quelconque des revendications précédentes, dans laquelle l'aliment pour animaux de compagnie contient 10⁴ à 10¹¹ cellules d'un micro-organisme probiotique par gramme de l'aliment pour animaux de compagnie.

9. Utilisation suivant l'une quelconque des revendications précédentes, dans laquelle l'aliment pour animaux de compagnie comprend une source de zinc.

10. Utilisation suivant l'une quelconque des revendications précédentes, pour améliorer ou maintenir l'aspect luisant et la souplesse du pelage d'un animal de compagnie.

11. Utilisation suivant l'une quelconque des revendications précédentes, pour réduire ou faciliter la prophylaxie de la desquamation dans le pelage d'un animal de compagnie.

12. Utilisation suivant l'une quelconque des revendications précédentes, dans laquelle la composition comprend de l'huile de soja.

13. Utilisation suivant l'une quelconque des revendications précédentes, dans laquelle la composition comprend de la chicorée.
